# EUROPEAN PATENT SPECIFICATION

(11) **EP 0 705 168 B1**
(45) Date of publication and mention of the grant of the patent: **21.06.2000**
(21) Application number: 95918227.0
(22) Date of filing: 24.04.1995
(51) Int. Cl.: B32B 15/06, F16J 15/12

(54) **A COMPRESSIBLE LAMINATE AND ITS USE**
KOMPRIMIERBARES LAMINAT UND SEINE VERWENDUNG
STRATIFIE COMPRESSIBLE ET SON UTILISATION

(30) Priority: 25.04.1994 SE 9401400
(43) Date of publication of application: 10.04.1996
(73) Proprietor: Trelleborg Rubore Aktiebolag, 391 28 Kalmar (SE)
(72) Inventor: JOSEFSSON, Percy, S-388 80 Ljungbyholm (SE)
(74) Representative: Lundin, Björn-Eric
(86) International application number: SE9500442
(87) International publication number: WO9529060

(56) References cited:
- WO-A-91/13758
- US-A- 3 897 576

## Description

The present invention relates to a compressible, shear-force absorbing and sealing laminate which is comprised of two rubber layers and an intermediate metal layer. The laminate is suitable for use in gasket constructions, with which good compressibility and shear-force absorbing ability in combination with an effective sealing ability are required, for instance in machine and engine (motor) designs.

Laminate seals or gaskets that are comprised of rubber-coated metal substrates are known to the art and used in motor vehicle and engine designs. However, these known laminates are neither highly compressible nor capable of absorbing shear forces, and it has been necessary to provide these properties through the medium of separate constructions, for instance by combining such laminates. The rubber coating is very thin and is applied in solution or dispersion form, by dipping the substrate in a solution or dispersion, or is applied with the aid of rollers or like devices, whereafter the applied layer is caused to dry, or the solution or dispersion vehicle is evaporated off so as to leave a thin rubber surface layer.

Although laminates that have thicker rubber layers, e.g. layers from 0.25 mm and upwards, are known to the art, the use of such laminates for the aforesaid purpose is limited because it has been found that rubber coatings that are excessively thick in the present context are unable to resist the wear to which for more advanced usage are subjected, i.e. cylinder head gaskets, without quickly becoming worn down.

For instance, US-A 3,897,576 describes the manufacture of a gasket which has the form of a rubber-metal-rubber laminate for use in internal combustion engines, this laminate consisting in a metal foil substrate with thin rubber layers applied on both sides thereof. The rubber layers have been formed and applied to the metal foil or sheet, by rolling a kind of rubber dough directly onto the metal foil or sheet. Both rubber layers are bonded to the metal surface by means of an adhesive film applied between rubber layer and metal surface. The rubber layer on the laminate can be given a thickness of about 0.30 mm and is cured by heating in the absence of pressure, wherewith the still dough-like composition is partially transformed from a plastic to a flow-resistant elastic state. However, as far as we are aware, the proposed laminate has not been accepted commercially for such advanced areas of application as those that require the use of gaskets of this kind.

It has not been possible to provide thinner rubber coatings on such laminates, because the thickness of the coating has been restricted by the manufacturing techniques available, at least with regard to more advanced areas of use. The inventive laminate has good compressibility and shear-force absorbing capacity and can therefore be used as gasket material for the various purposes that require such characteristics. However, the inventive laminate will be described and presented in the following mainly with reference to its specific use as material for the manufacture of cylinder head gaskets that are intended for internal combustion engines.

At present, cylinder head gaskets are comprised of a pack of thin metal plates, which are often riveted together. The pack may contain from three to six plates, which may be coated with an extremely thin layer of paint, rubber or some other polymer, this coating having been applied in the form of a solution or dispersion, as mentioned above.

In many cases, the gaskets used today present problems and especially when used with engines in which the cylinder heads and engine blocks are comprised of dissimilar materials, as is becoming more and more usual. For instance, it is becoming more usual to produce the cylinder head from an aluminium alloy and to produce the engine block from cast iron. As a result of the different thermal properties of the materials, transverse movements occur between cylinder head and motor block while the engine is running. This increases the requirement of the gaskets to withstand the shear forces to which they are subjected as a result of thermally forced transverse movements. Hitherto, one solution has been to increase the number of metal layers in the gasket. However, this solution cannot be considered to be the final solution, for other reasons. Firstly, more complicated gaskets become more expensive, of course, since both material costs and manufacturing costs are greatly increased. A second reason has an environmental connotation. The thicker the gaskets, the more liable it is that pockets are formed which are capable of causing a higher concentration of non-combusted hydrocarbons in the exhaust gases, a consequence which is extremely problematic in view of present-day environmental requirements. An ideal gasket material for modern internal combustion engines shall thus exhibit good properties with regard to compressibility and its ability to absorb shear forces while, at the same time, being thin and easy to manufacture cheaply, besides having an effective blow-by resistance, which is particularly important in the present context, i.e. the gasket shall provide the best possible seal under the difficult conditions that prevail in respect of a cylinder head gasket.

The object of the present invention is to provide a laminate material which fulfils the aforesaid high requirements placed on a material which is suitable for use as gasket material for highly advanced operating conditions, for instance in internal combustion engines.

To this end, the inventive laminate has the characteristic features set forth in the following Claims.

The inventive laminate is thus characterized in that it includes two carrier-calendared rubber films, each having a thickness of at least 0.05 mm, and a thin metal plate disposed between said films. Each rubber film is vulcanized to the plate. The rubber used will preferably be chosen from existing nitrile or ethylene acrylate qualities.

The plate will suitably have a thickness of about 0.2-0.4 mm and each of the rubber films may have a thickness within the range of 0.05-0.20 mm, preferably a thickness of about 0.08 mm. The outwardly facing part of the rubber films will conveniently have a textile carrier structure, preferably a roughened structure or pimpled (dimpled) structure.

The specific combination of characteristic features defined in the Claims gives the laminate the unique combination of being compressible, having good shear-force absorbing ability and blow-by resistance (sealing ability), indicated above. It is thus important that the rubber coatings will have those specific properties and that specific structure that are exhibited by calendared rubber films, among other things homogeneity and uniformity with regard to both physical properties and dimensions, and shall be as pore-free as possible. These properties cannot be achieved with a rubber covering that has been applied in the form of a solution or in the form of a dough that has been rolled-out directly on the plate or substrate surfaces, since rubber coatings or coverings formed in this way will always include dough-forming residues or solvent residues that result in the formation of pores and other inhomogeneities and thereby give rise to weakened zones and also possible adhesive layers. It is also important that the rubber films have been applied to the plate with the aid of a calendaring carrier or vehicle which will ensure highly effective and primarily flat abutment with the surface of the plate in the absence of any tendency towards unevenness in the abutment surfaces, and which will also allow the outer surface to be given a structure that is commensurate with the carrier or vehicle chosen. The surface structure that is obtained when calendaring and vulcanizing a textile carrier, for instance with a so-called linen structure has been found especially beneficial. It has surprisingly been found that the essentially rough or "pimpled" outer surface provides improved abutment and sealing against metal surfaces. A material which possesses these qualities can also be affixed efficiently by vulcanization with regard to the mechanical strength of the rubber-plate joins or bonds. The method of manufacturing using carriers and band-vulcanizing machines is the same as that described in our earlier patent specification published, for instance, as EP-A-594601 (WO 91/13758).

The invention will be presented in more detail below with reference to a number of examples which describe different tests that have been carried out on the material.

### Example 1

A laminate comprised of a 0.20 mm stainless steel plate and two 0.08 mm rubber layers was subjected to a compressibility test in accordance with the following:

A pack consisting in ten material samples measuring 40 x 40 mm was subjected to a pressure of 16.5 MPa with a force of 2.4 kN at room temperature. This was repeated seven times while maintaining the pressure for a period of one second. The pack of laminate samples was found to have been compressed by 16 µm, which corresponds to a specific compressibility of 2 µm/10 mPa.

### Example 2

A test was carried out on a 4-cylinder, 2 litre, 16 valve SAAB 9000 fuel injection engine over a period of twenty-four hours. The engine was prepared by lowering the piston heads to receive a thinner cylinder head gasket produced from an inventive laminate.

The gasket was produced from one single laminate consisting in 0.08 mm rubber/0.2 mm stainless steel/0.08 mm rubber of quality Rubore RGM-1-ST.

The engine was bench-run in accordance with a test programme which simulated motor-way driving, including long periods of full load at maximum r.p.m. and maximum torque, interspersed with periods of intermediate loads and interrupted by an idling period at thirty-minute intervals.

No unfavourable effects whatsoever were observed with regard to the normal function of the gasket during the tests.

## Claims

1. A compressible, shear-force absorbing and sealing laminate structure comprising two rubber layers and an intermediate metal layer, **characterized** by two thin carrier-calendared rubber films, each having a thickness of at least about 0.05 mm, and a thin metal plate disposed between the rubber films, wherein each rubber film is affixed to the plate by vulcanization.

2. A laminate according to Claim 1, **characterized** in that the plate has a thickness of about 0.2-0.4 mm and each of the rubber films has a thickness of 0.05-0.20 mm, preferably about 0.08 mm.

3. A laminate according to Claim 1 or Claim 2, **characterized** in that the outwardly facing surfaces of the rubber films have a textile-carrier structure, preferably a roughened or pimpled structure.

4. The use of a laminate according to Claims 1-3 as gasket material, for instance as a cylinder head gasket for internal combustion engines.

## Patentansprüche

1. Komprimierbare, scherkraftabsorbierende und dichtende Laminatstruktur, die zwei Kautschukschichten und eine dazwischenliegende Metallschicht umfaßt, gekennzeichnet durch zwei dünne Träger-kalanderte Kautschukfilme, von denen jeder eine Dicke von wenigstens etwa 0,05 mm hat, und eine dünne zwischen den Kautschukfilmen angeordnete Metallplatte, wobei jeder Kautschukfilm an der Platte durch Vulkanisation befestigt ist.

2. Laminat nach Anspruch 1, dadurch gekennzeichnet, daß die Platte eine Dicke von etwa 0,2 bis 0,4 mm hat und jeder der Kautschukfilme eine Dicke von 0,05 bis 0,20 mm, vorzugsweise etwa 0,08 mm hat.

3. Laminat nach Anspruch 1 oder Anspruch 2, dadurch gekennzeichnet, daß die nach außen blickenden Oberflächen der Kautschukfilme eine Textil-Trägerstruktur, vorzugsweise eine aufgerauhte oder pickelige Struktur haben.

4. Verwendung eines Laminats nach Anspruch 1 bis 3 als Dichtungsmaterial, beispielsweise als eine Zylinderkopfdichtung für Verbrennungsmotoren.

## Revendications

1. Structure de stratifié compressible de scellement et d'absorption de l'effort au cisaillement comprenant deux couches en caoutchouc et une couche intermédiaire en métal, caractérisée par deux pellicules en caoutchouc calandrées, ayant chacune une épaisseur d'environ 0.05 mm, et d'une fine plaque métallique placée entre les pellicules en caoutchouc, dans laquelle chaque pellicule en caoutchouc est fixée à la plaque par vulcanisation.

2. Stratifié selon la revendication 1, caractérisé en ce que la plaque a une épaisseur d'environ 0.2-0.4 mm et chaque pellicule en caoutchouc a une épaisseur de 0.05-0.20 mm, de préférence de 0.08 mm.

3. Stratifié selon la revendication 1 ou la Revendication 2, caractérisé en ce que les surfaces des pellicules en caoutchouc qui font face à l'extérieur ont une structure calandrée, de préférence une structure rugueuse ou granuleuse.

4. Utilisation d'un stratifié selon les revendications 1 à 3 en tant que joint, comme par exemple un joint de culasse de cylindre pour moteurs à combustion interne.
